# EUROPEAN PATENT SPECIFICATION

(11) **EP 3 574 476 B1**
(45) Date of publication and mention of the grant of the patent: **26.08.2026**
(21) Application number: 18702983.0
(22) Date of filing: 31.01.2018
(51) Int. Cl.: G06T 12/00

(54) **METHOD FOR IMAGE RECONSTRUCTION OF AN OBJECT, IN PARTICULAR BASED ON COMPUTED-TOMOGRAPHY IMAGE RECONSTRUCTION, AND APPARATUS, SYSTEM AND COMPUTER PROGRAM PRODUCT FOR THE SAME**
VERFAHREN ZUR BILDREKONSTRUKTION EINES OBJEKTS, INSBESONDERE AUF BASIS EINER COMPUTERTOMOGRAFIEBILDREKONSTRUKTION UND VORRICHTUNG, SYSTEM UND COMPUTERPROGRAMMPRODUKT DAFÜR
PROCÉDÉ DE RECONSTRUCTION D'IMAGE D'UN OBJET, BASÉ EN PARTICULIER SUR UNE RECONSTRUCTION D'IMAGE DE TOMODENSITOMÉTRIE, ET APPAREIL, SYSTÈME ET PRODUIT-PROGRAMME D'ORDINATEUR ASSOCIÉS

(43) Date of publication of application: 04.12.2019
(73) Proprietor: Mitos GmbH, 85748 Garching bei München (DE)
(72) Inventor: FEHRINGER, Andreas, 85748 Garching bei München (DE); EPPLE, Michael, 85748 Garching bei München (DE); WILLNER, Marian, 85748 Garching bei München (DE)
(74) Representative: Rolinec, Mark
(86) International application number: PCT/EP2018/052447
(87) International publication number: WO 2019/149359

(56) References cited:
- US-A1- 2007 053 483
- US-A1- 2017 148 157
- XING ZHAO ET AL: "GPU-Based 3D Cone-Beam CT Image Reconstruction for Large Data Volume", INTERNATIONAL JOURNAL OF BIOMEDICAL IMAGING, vol. 1, no. 6, 1 January 2009 (2009-01-01), pages 612 - 8, XP055099185, ISSN: 1687-4188, DOI: 10.1155/2009/149079

## Description

The present invention relates to a method for image reconstruction of an object, in particular based on computed-tomography image reconstruction, as well as an apparatus, a system and a computer program product for the same.

### Background

X-ray computed tomography (CT) is an imaging modality for non-destructive 3-D investigation. It is very common in medical applications and becomes increasingly popular for non-destructive testing in industry and science.

The most common alternatives for nondestructive examination are x-ray radiographs, light microscopy, ultrasound imaging and magnetic resonance imaging (MRI).

In contrast to X-ray CT, the last three do not carry the risk of radiation damage. For radiographs that risk is reduced by a lot. Moreover, light microscopy, ultrasound and radiographic imaging are much cheaper. The great asset of X-ray CT is its by far most accurate spatial information. Especially the three cheap methods allow only very limited 3-D investigation. Compared to MRI, X-ray CT is a lot faster, cheaper and more accurate.

X-ray computed tomography allows to create a 3-D map of coefficients that describe how strongly the X-rays interact with the material. This map allows to distinguish different materials or mass densities. The working principle of CT consists of two basic steps. The first is data acquisition in which the desired quantity can be measured only indirectly. The second is reconstruction on a computer where the 3-D map of coefficients is retrieved from the measurement. Gray-scale images representing 2-D planes through the volumetric data are the most common way to assess this map for humans.

The basic setup for a tomographic scan consists of an x-ray source placed on one side of a specimen, a 2-D detector placed at the opposite side and a mechanical mechanism that either rotates the specimen in the middle perpendicularly to the X-ray beam or, vice versa, the two devices around the specimen.

Detailed information about x-ray sources, the interaction of x-rays with matter, and the different acquisition techniques described can be found in literature, including scientific literature as well as patent literature.

The idea behind computed tomography, as already stated above, is creating a 3-D map (3-dimensional image data) of local attenuation coefficients from a set of transmission views through a sample (object). More detailed information about analytical tomographic reconstruction can be found in the literature; see e.g. the article "Principles of computerized tomographic imaging" by A. C. Kak and M. Slaney, Classics in applied mathematics, IEEE Press, 1988; and "Cone-Beam Reconstruction Using Filtered Back Projection" by H. Turbell, PhD thesis, Linköping University, Sweden, 2001.

While it is theoretically possible to reconstruct 3-dimensional image data analytically, this approach of analytical reconstruction is very sensitive to noise and requires a high number of obtained 2-dimensional images of the object to be measured. Another less sensitive method is the so-called iterative reconstruction which provides results of vastly improved quality. The approach of iterative reconstruction typically comes however with a high computational burden and additional parameters.

Regarding patent literature relating to iterative reconstruction, reference is made to WO 2013/088294 A1 and US 9,449,404 B2, for example.

US 2017/148157 A1 relates to an image processing apparatus that includes a control unit that reconstructs images by using raw data, a storage unit that stores the raw data, the images, and reconstruction conditions used when the images are reconstructed, in correlation with each other, a display unit; and an input unit that inputs selection of an image on which post-reconstruction will be performed among the images stored in the storage unit and post-reconstruction conditions, by referring to the image displayed on the display unit, in which the control unit receives selection of the image which is input via the input unit, reads selected image reconstruction conditions based on the received selection of the image from the storage unit, calculates comparison information of image quality on the basis of the read reconstruction conditions and post-reconstruction conditions input via the input unit, and displays the calculated comparison information on the display unit.

US 2007/053483 A1 relates to an X-ray computed tomography apparatus that includes an X-ray source, a high voltage generating unit, an X-ray detector detecting X-rays transmitted through a subject to generate projection data, a storage unit storing the projection data in association with electrocardiographic data of the subject, a setting unit setting a specific cardiac phase in accordance with an operator's instruction, a reconstruction unit reconstructing a tomogram based on projection data sets acquired in specific periods centered on the specific cardiac phase throughout cardiac cycles, a period extending unit extending the specific period on the basis of a heart rate fluctuation range of the subject, and a control unit controlling the high voltage generating unit to generate a relatively high dose of X-rays in the extended specific period and generate a relatively low dose of X-rays in a period other than the extended specific period.

In view of the above, it is an object of the present invention to provide a concept of image reconstruction of an object, in particular based on computed-tomography image reconstruction, and in particular for reconstructing a 3-dimensional reconstructed image data. Specifically, it is an object of the invention to provide a concept of image reconstruction of an object which can be practically applied for medical purposes as well as for non-destructive testing of objects, and in particular for analytical approaches as well as for iterative approaches, and which is as reliable and efficient as commonly known reconstruction algorithms, but which allows parameter finding at less computational burden and/or quicker.

### Summary

For solving the above object, according to the present invention, there are proposed a method for image reconstruction of an object, in particular based on computed-tomography image reconstruction, an apparatus, a system and a computer program product according to the independent claims. Dependent claims relate to preferred exemplary embodiments.

According to the present invention, there is proposed a computer-implemented method for image reconstruction of an object according to claim 1.

In case of N = 3, there is proposed a method for image reconstruction of an object, in particular based on computed-tomography image reconstruction, comprising obtaining a plurality of 2-dimensional images of the object at different angular positions relative to a line between the between a light source and a 2-dimensional image detector, and reconstructing 3-dimensional image data based on an image reconstruction algorithm which uses, as input, data of the plurality of 2-dimensional images of the object and at least one input parameter.

On the other hand, in case of N = 4, there is proposed a method for image reconstruction of an object, in particular based on computed-tomography image reconstruction, comprising obtaining a plurality of 3-dimensional images of the object at different angular positions relative to a line between the between a light source and a 2-dimensional image detector or 3-dimensional image detector, and reconstructing 4-dimensional image data based on an image reconstruction algorithm which uses, as input, data of the plurality of 3-dimensional images of the object and at least one input parameter. Herein, the 3-dimensional images of the object may resolve, in one or more dimensions, e.g. energy and/or time, e.g. in case of an energy-resolving and/or time-resolving detector.

The N-dimensional image data is reconstructed on the basis of an N-dimensional pseudo-object represented by a stack of a plurality of slices. Each slice of the plurality of slices of the pseudo-object is associated with a same base slice of the object.

The reconstructing N-dimensional image data includes using, for each slice of the pseudo-object, a different value of the at least one input parameter as input to the image reconstruction algorithm.

Preferably, in some exemplary embodiments, the plurality of (N-1)-dimensional images are obtained from different viewpoints with respect to a rotational axis being arranged in the Z-direction.

Preferably, in some exemplary embodiments, the base slice of the object is arranged substantially along a 2-dimensional X-Y-plane through the object perpendicular to the rotation axis.

Preferably, in some exemplary embodiments, the N-dimensional pseudo-object is represented by the stack of the plurality of slices being stacked in the Z-direction.

Preferably, in some exemplary embodiments, different planar sections of the N-dimensional image data perpendicular to a stacking direction of the pseudo object represent image reconstructions of the same base slice of the object at different values of the at least on input parameter of the image reconstruction algorithm.

Preferably, in some exemplary embodiments, the method further comprises: extracting sliced image data from each of the plural obtained (N-1)-dimensional images, each sliced image data preferably representing one or more adjacent pixel rows or columns of the respective obtained (N-1)-dimensional image.

Preferably, in some exemplary embodiments, the method further comprises: generating, preferably for each of the plural obtained (N-1)-dimensional images, a respective modified (N-1)-dimensional image by stacking the respective extracted sliced image data of the respective obtained (N-1)-dimensional image multiple times, in particular in a pixel row direction or in a pixel column direction.

Preferably, in some exemplary embodiments, the N-dimensional image data is reconstructed based on the image reconstruction algorithm which uses, as input, data of the plurality of modified (N-1)-dimensional images.

Preferably, in some exemplary embodiments, the method further comprises selecting a certain value of the at least one input parameter based on the reconstructed N-dimensional image data.

The method further comprises reconstructing final N-dimensional image data based on the image reconstruction algorithm using, as input, the plurality of obtained (N-1)-dimensional images of the object and/or the selected certain value of the at least one input parameter.

Preferably, in some exemplary embodiments, selecting the certain value of the at least one input parameter includes: calculating, preferably for each slice of the pseudo object, a respective metric parameter based on applying a pre-determined metric calculation algorithm to (N-1)-dimensional image data of a respective planar section of the N-dimensional image data associated with the respective slice of the pseudo object, identifying the respective slice of the pseudo object for which the respective metric parameter has its extremal value, and/or identifying the respective input value of the at least one input parameter used for reconstructing the respective planar section of the N-dimensional image data associated with the identified respective slice of the pseudo object as the selected certain value of the at least one input parameter.

Preferably, in some exemplary embodiments, the at least one input parameter represents: a weight parameter for defining a weight of a data term and a regularization term according to an iterative image reconstruction algorithm; a penalty function parameter used in a penalty function for a regularization term according to an iterative image reconstruction algorithm; a center shift parameter indicative of a shift of an actual rotational axis of the measurement system with respect to a target rotational axis of the measurement system; a correction parameter indicative of a beam-hardening correction; a filter parameter used in an image filter applied to (N-1)-dimensional images; and/or a weight factor weighting different image source energies in Dual-Energy-CT image reconstruction.

According to the present invention, there is also proposed an apparatus for image reconstruction of an object according to claim 7.

Preferably, in some exemplary embodiments, there may be provided recursive refinement of the range of parameters used in the parameter dimension either limiting it to improve the accuracy or widening or shifting it to extend the search range for the optimum.

According to the present invention, there is also proposed a system for image reconstruction of an object according to claim 9.

According to the present invention, there is also proposed a computer program product according to claim 10.
Fig. 1 exemplarily illustrates a schematic view of a measurement system;
Fig. 2 exemplarily illustrates obtaining multiple 2-dimensional images of an object at different angular positions from different viewpoints in the measurement system as shown in Fig. 1;
Fig. 3 exemplarily illustrates a concept of computed-tomography-based iterative reconstruction of 3-dimensional image data of an object;
Fig. 4 exemplarily illustrates a process of computed-tomography-based iterative reconstruction of 3-dimensional image data;
Fig. 5 exemplarily illustrates a concept of using a pseudo-volume generated based on 2-dimensional images of an object according to exemplary embodiments;
Fig. 6 exemplarily illustrates a concept of computed-tomography-based image reconstruction of 3-dimensional image data of an object according to exemplary embodiments;
Fig. 7 exemplarily illustrates a process of computed-tomography-based image reconstruction of 3-dimensional image data of an object according to an exemplary embodiment;
Fig. 8 exemplarily illustrates a process of computed-tomography-based image reconstruction of 3-dimensional image data of an object according to another exemplary embodiment; and
Fig. 9 exemplarily illustrates a schematic view of a measurement system including an apparatus for computed-tomography-based image reconstruction of 3-dimensional image data of an object according to exemplary embodiments.

### Detailed Description of the Drawings and

### Description of Preferred Exemplary Embodiments

In the following, preferred aspects and embodiments of the present invention will be described in more detail with reference to the accompanying figures. Same or similar features in different drawings and embodiments are referred to by similar reference numerals. It is to be understood that the detailed description below relating to various preferred aspects and preferred exemplary embodiments are not to be meant as limiting the scope of the present invention.

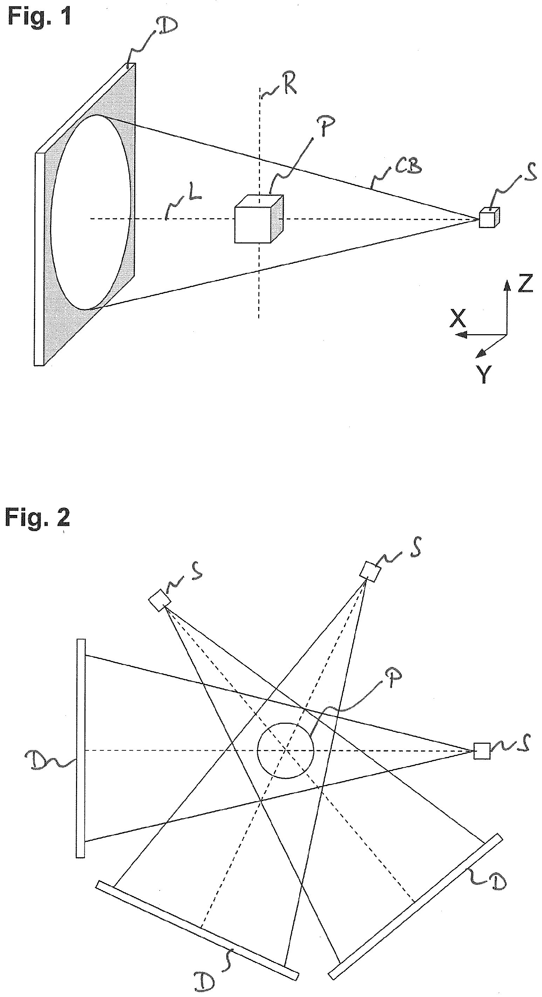

Fig. 1 exemplarily illustrates a schematic view of a measurement system. The measurement system exemplarily includes a light source S, in particular an X-ray source, and a 2-dimenstional image detector D arranged opposite to the light source S.

Exemplarily, an object P to be measured is arranged between the light source S and the detector D on a line L extending between the light source S and the detector.

Exemplarily, the light source S is configured to emit light, in particular X-ray light, towards the detector D in a cone-beam-shaped beam geometry (cone beam geometry). That is, the light beam CB emitted from the light source S exemplarily has a conical shape ("cone beam") and exemplarily an area (e.g. a quasi rectangular area) of the beam CB hits a planar detector surface of the detector D.

However, the invention is not limited to the use of a light source S emitting light towards the detector D in a cone-beam-shaped beam geometry, but in other exemplary embodiments also light sources having other beam geometries may be used, such as e.g. light sources which emit light, in particular X-ray light, towards the detector D in a parallel-beam-shaped or fan-beam-shaped beam geometry (parallel beam geometry or fan beam geometry).

In Fig. 1, the detector D is exemplarily shown as having a planar detection surface, however, the invention is not limited to the use of detectors having a planar detection surface, but also detectors having curved detection surfaces can be used in exemplary embodiments of the invention.

Such principle configuration of a computed-tomography-based measurement system is well known in the prior art and used in many applications of computed-tomography, including medical applications as well as in non-destructive testing of materials and physical objects, in particular non-biological objects.

For computed-tomography-based measurements, typically plural 2-dimensional images of the object to be measured are taken from different viewpoints (viewing directions) at different angular positions of the object. This may be achieved by rotating the object between the stationary assembly of light source and detector or by keeping the object stationary and rotating the assembly of light source and detector about a rotational axis extending through the object.

It is to be noted that the invention is not limited to any of the above, and 2-dimensional images of the object from different viewpoints (viewing directions) at different angular positions of the object can be obtained in exemplary embodiments of the invention by rotating the object between the stationary assembly of light source and detector and/or by moving the assembly of light source and detector along any other trajectory around P.

Fig. 2 exemplarily illustrates obtaining multiple 2-dimensional images of the object P at different angular positions from different viewpoints (viewing directions) in the measurement system as shown in Fig. 1, which is exemplarily illustrating an example in which the object P is kept stationary and the assembly of light source S and detector D is rotated about the rotational axis R extending through the object P. However, as previously mentioned, the invention is not limited to such configuration, and the plural 2-dimensional objects can also be obtained by, additionally or alternatively, rotating or moving the object P.

Fig. 2 exemplarily illustrates three different rotational angular positions of the assembly of the light source S and the detector D relative with respect to the object P arranged on the line between the light source S and the detector D. In each of the positions, the light source S is activated to emit the beam CB through the object P towards the detector D, and the detector D detects 2-dimensional image data associated with the respective angular position.

While Fig. 2 exemplarily illustrates three different angular positions of the assembly of the light source S and the detector D relative with respect to the object P, 2-dimensional images of the object P may be taken / detected at more than three different angular positions of the assembly of the light source S and the detector D, preferably at the same angular distance. That is, for example, the 2-dimensional images of the object P may be taken / detected at angular distances k/M * 360° with M being an integer of two or more, and k = {1, 2, ...., M}.

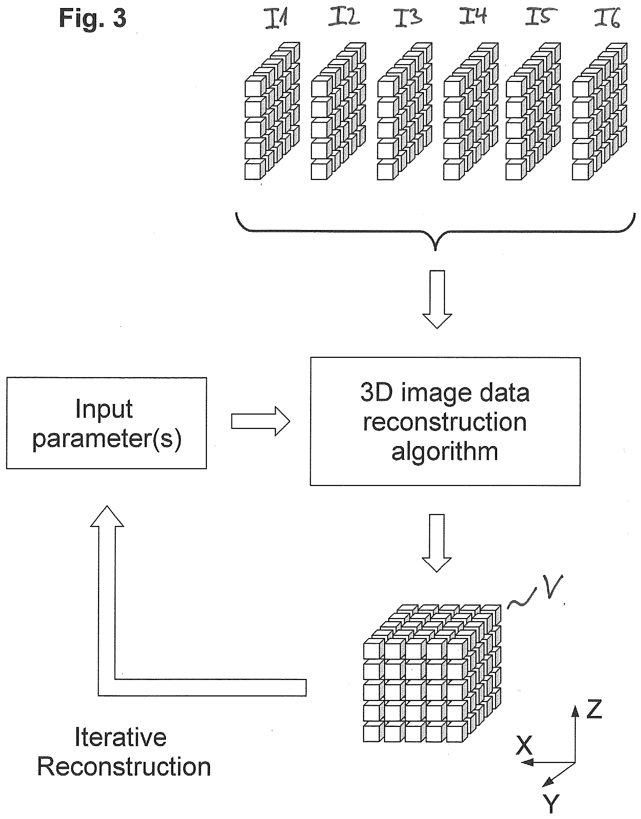

Fig. 3 exemplarily illustrates a concept of computed-tomography-based iterative reconstruction of 3-dimensional image data of an object as is commonly known.

As previously mentioned, at first, plural 2-dimensional images are taken / detected at more than three different relative angular positions of the assembly of the light source S and the detector D relative with respect to the object P to be measured. Exemplarily, six 2-dimensional images, e.g. at angular distances k/6 * 360° with k = {1, 2, 3, 4, 5, 6}, can be obtained, exemplarily referred to as I1, I2, I3, I4, I5 and I6.

The 2-dimensional images I1, I2, I3, I4, I5 and I6 respectively are provided as image data of m times n pixels, m being the width of the respective 2-dimensional image and n being the height of the respective 2-dimensional image. Exemplarily, in Fig. 3, image data of 5 times 5 pixels (i.e. exemplarily 25 pixels per image), each pixel being respectively represented by a cube in Fig. 3, is provided, wherein in actual embodiments the width and height of the images may be much higher to obtain a good resolution of the reconstructed 3-dimensional image data.

The plural 2-dimensional images I1, I2, I3, I4, I5 and I6 are then input to a 3-dimensional image data reconstruction algorithm, e.g. provided for iterative reconstruction, together with initial values of one or more input parameters of the 3-dimensional image data reconstruction algorithm.

For example, specifically regarding iterative reconstruction algorithms, the one or more input parameters may include at least one of:
- a weight parameter for defining a weight of a data term and a regularization term according to an iterative image reconstruction algorithm (typically referred to as lambda or λ); and/or
- a penalty function parameter used in a penalty function for a regularization term according to an iterative image reconstruction algorithm, for example for correcting a gray scale (typically referred to as gamma or y).

Furthermore exemplarily, in addition or alternatively, the one or more input parameters may include at least one of:
- a center shift parameter indicative of a shift of an actual rotational axis of the measurement system with respect to a target rotational axis of the measurement system;
- a correction parameter indicative of a beam-hardening correction;
- an artifact correction parameter for correcting image artifacts;
- a filter parameter used in an image filter applied to 2-dimensional images; and/or
- a weight factor weighting different image source energies in Dual-Energy-CT image reconstruction.

Then, based on the input 2-dimensional images, e.g. the image data of I1, I2, I3, I4, I5 and I6, and further based on the input initial value(s) of the one or more input parameters used in the 3-dimensional image data reconstruction algorithm, the 3-dimensional image data reconstruction algorithm is executed to output a reconstructed 3-dimensional image data V of a reconstructed volume (including the volume of the object to be measured / reconstructed).

The output reconstructed 3-dimensional image data V includes multiple voxels. Exemplarily, in Fig. 3, the output reconstructed 3-dimensional image data V includes 5 times 5 times 5 voxels (i.e. exemplarily 125 voxels), each voxel being respectively represented by a cube in Fig. 3, wherein in actual embodiments the number of voxels may be much higher to obtain a good resolution of the reconstructed 3-dimensional image data.

As exemplarily illustrated in Fig. 3, the three-dimensional voxel space of the reconstructed 3-dimensional image data corresponds to the three spatial dimensions X, Y and Z. That is, the reconstructed 3-dimensional image data represents a reconstructed volume in the regular space of the three spatial dimensions X, Y and Z.

Then, the obtained output reconstructed 3-dimensional image data V can be analyzed with respect to its features, such as noise, blurriness, sharpness, and if the obtained output reconstructed 3-dimensional image data V does not satisfy the requirements or otherwise appears to require optimization, one or more values of the one or more input parameters are adapted and, then, based on the input 2-dimensional images, e.g. the image data of I1, I2, I3, I4, I5 and I6, and further based on the adapted input value(s) of the one or more input parameters used in the 3-dimensional image data reconstruction algorithm, the 3-dimensional image data reconstruction algorithm is executed again to output another reconstructed 3-dimensional image data V of a reconstructed volume (including the volume of the object to be measured / reconstructed).

Such process may be iteratively repeated until the obtained output reconstructed 3-dimensional image data V satisfies the requirements.

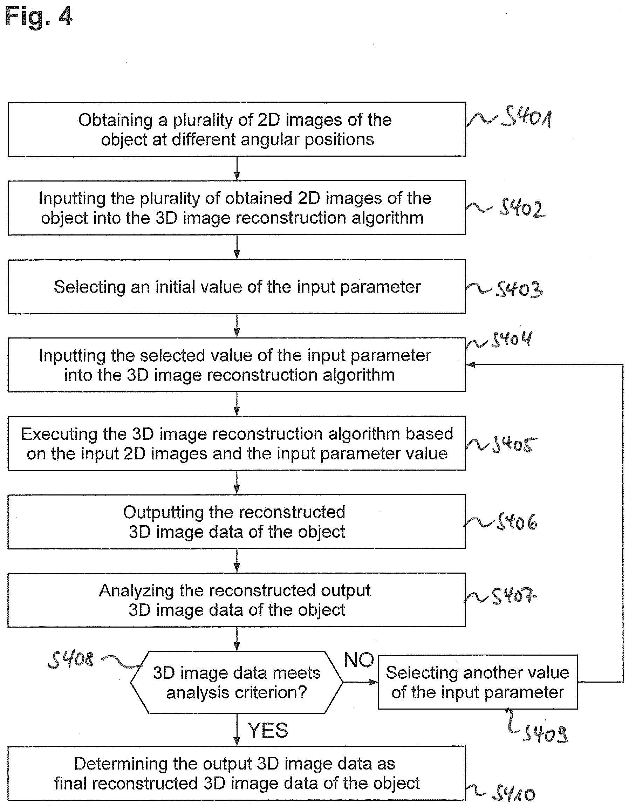

Fig. 4 exemplarily illustrates a process of computed-tomography-based reconstruction of 3-dimensional image data.

In step S401, a plurality of 2-dimensional images of the object P to be measured are obtained at different angular positions of the assembly of the light source S and the detector D relative with respect to the object P to be measured.

In step S402, the plural obtained 2-dimensional images of the object P to be measured are input as input image data into the 3-dimensional image data reconstruction algorithm.

In step S403, an initial value (or initial values) of the one or more input parameters can be selected (e.g. based on a manual input of an operator or based on pre-stored default parameter values(s)).

In step S404, the selected initial value (or initial values) of the one or more input parameters are input into the 3-dimensional image data reconstruction algorithm, and the 3-dimensional image data reconstruction algorithm is executed in step S405 based on the input initial value (or initial values) of the one or more input parameters and the plural input 2-dimensional images of the object P to be measured.

In step S406, the reconstructed 3-dimensional image data is output from the executed 3-dimensional image data reconstruction algorithm, and the output reconstructed 3-dimensional image data is analyzed in step S407 as to its image characteristics or features, such as e.g. regarding to its occurrence of noise, its blurriness, its sharpness, or the like.

In step S408, it is determined whether the output reconstructed 3-dimensional image data meets one or more analysis criteria and, if step S408 returns YES, the reconstructed 3-dimensional image data is determined to represent the final reconstructed 3-dimensional image data of the object P in step S410 and the process ends.

However, if step S408 returns NO, in step S409 other value(s) of the one or more parameters for repeating the process are selected. Then, the process returns to step S404, and the steps S404 to S408 are repeated, until step S408 returns YES.

Specifically, in the next iteration, the other value(s) of the one or more parameters selected in step S409 are input into the 3-dimensional image data reconstruction algorithm in step S404, and step S405 executes the 3-dimensional image data reconstruction algorithm based on the newly input value (or newly input values) of the one or more input parameters for the next iteration and the plural input 2-dimensional images of the object P to be measured.

For further information on iterative reconstruction, please refer to e.g. WO 2013/088294 A1 and US 9,449,404 B2.

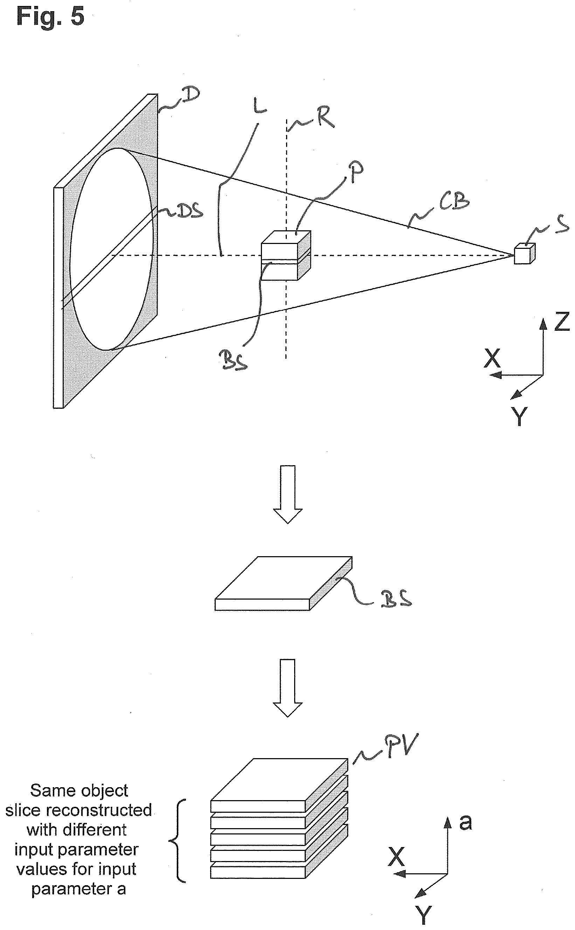

Fig. 5 exemplarily illustrates a concept of using a pseudo-volume generated based on 2-dimensional images of an object according to exemplary embodiments.

In contrast to the above described regular method based on iterative reconstruction, exemplary embodiments of the present invention initially do not use the full 2-dimensional information of the plural 2-dimensional images of the object P but only those information of the plural 2-dimensional images relating to a certain slice (substantially a 2-dimensional planar slice) through the object P, referred to as base slice BS in the following.

For example, in case of a light source emitting a light beam of a cone-beam geometry, a center slice of the object P is selected as the base slice BS, see e.g. Fig. 5.

Specifically, in case of a cone-beam geometry, the center slice of the object P is preferably represented by a planar slice through the object P being defined by a plane that includes the center line of the cone-beam geometry (exemplarily coinciding with the line L between the light source S and the detector D in Fig. 5) and which is perpendicular to the rotational axis R of the measurement system. That is, in case of a cone-beam geometry, the center line (cone axis) of the cone-beam geometry of the light beam emitted from the light source S lies within the planar slice through the object P, and the planar slice is arranged perpendicular to the rotational axis R of the measurement system.

Preferably, pixel rows of pixel sensors of the detector D are arranged such that the planar slice through the object P representing the center slice is intersecting the detector surface of the detector D in parallel with the pixel rows of pixel sensors, i.e. a pixel column direction of the detector D is preferably arranged parallel to the rotational axis R of the measurement system.

In case of a cone-beam geometry, the height of the base slice BS through the object P is preferably such that the horizontally oriented projection DS of the base slice BS on the detector surface of the detector D is substantially one pixel height.

Preferably, in case of a cone-beam geometry, the projection DS of the base slice BS on the detector surface of the detector D corresponds to one pixel row.

On the other hand, if a light source S emitting light according to a parallel beam geometry is used, the height of the base slice BS through the object P is preferably such that the horizontally oriented projection DS of the base slice BS on the detector surface of the detector D is substantially one or more pixel heights.

Preferably, in case of a parallel beam geometry, the projection DS of the base slice BS on the detector surface of the detector D corresponds to one or more adjacent pixel rows.

Furthermore, in case of a parallel beam geometry, the center slice of the object P is preferably represented by a planar slice through the object P being defined by a plane that includes the beam lines of the parallel beam geometry and which is perpendicular to the rotational axis R of the measurement system. That is, in case of a parallel beam geometry, the beam lines of the parallel beam geometry of the light beam emitted from the light source S lie within the planar slice through the object P, and the planar slice is arranged perpendicular to the rotational axis R of the measurement system.

In summary of the above, independent of the beam geometry, and the planar slice of the base slice BS through the object P is arranged preferably perpendicular to the rotational axis R of the measurement system in exemplary embodiments.

As can be seen in the middle portion of Fig. 5, a base slice BS of the object P is determined, and the base slice BS represents a sliced volume of a part of the object P along the planar slice which is arranged perpendicular to the rotational axis R of the measurement system.

According to exemplary embodiments of the present invention, based on the determined base slice BS, a pseudo volume PV is generated by stacking the same sliced volume of the base slice BS in a stacking direction which is represented by the direction of the rotational axis R of the measurement system (e.g. the Z-direction in the present exemplary embodiments of Fig. 5).

Accordingly, when generating the pseudo volume PV (which still has the general spatial directions X and Y) the third spatial dimension is reduced, since each sliced volume of the slice stack of the pseudo volume PV represents the same sliced volume of the base slice BS of the object P and moving in the stacking direction does not represent moving in the Z-direction anymore (in contrast to Fig. 3).

As an underlying idea and main aspect of exemplary embodiments, the dimension of the stacking direction in the pseudo volume PV is used to apply different values of an input parameter of the image reconstruction algorithm.

That is, the third (exemplary vertical) directional dimension of the pseudo volume PV, instead corresponding to the spatial dimension of the Z-direction, is used as a dimension in the parameter space of the input parameter (exemplarily referred to as input parameter a in Fig. 5), which is exemplarily illustrated in Fig. 5 in that the three-dimensional coordinate space of the pseudo volume PV includes the X-axis and Y-axis as the 2-dimensional representation of the spatial dimensions X and Y, and the third coordinate axis is labeled with the input parameter "a" of the 1-dimensional parameter space of the input parameter a.

Again, the input parameter "a" may exemplarily represent at least one of:
- a weight parameter for defining a weight of a data term and a regularization term according to an iterative image reconstruction algorithm (typically referred to as lambda or λ); and/or
- a penalty function parameter used in a penalty function for a regularization term according to an iterative image reconstruction algorithm, for example for correcting a gray scale (typically referred to as gamma or y).

Furthermore exemplarily, in addition or alternatively, the input parameter "a" may exemplarily represent at least one of:
- a center shift parameter indicative of a shift of an actual rotational axis of the measurement system with respect to a target rotational axis of the measurement system;
- a correction parameter indicative of a beam-hardening correction;
- an artifact correction parameter for correcting image artifacts;
- a filter parameter used in an image filter applied to 2-dimensional images; and/or
- a weight factor weighting different image source energies in Dual-Energy-CT image reconstruction.

Accordingly, the parameter space of one single input parameter can be used as the domain of the third dimension of the pseudo volume PV, but since the space of the pseudo volume PV is still 3-dimensional (2 spatial dimensions, e.g. X and Y, and one parameter space dimension of input parameter a), still a 3-dimensional image reconstruction algorithm, optimized for creating 3-dimensional image data, can be reliably and efficiently used.

At the same time, it is possible to test the effect of multiple different values of the input parameter(s) of the 3-dimensional image reconstruction algorithm in the execution of the 3-dimensional image reconstruction algorithm, wherein instead of the requirement to execute the 3-dimensional image reconstruction algorithm multiple times iteratively, as e.g. explained in connection with Figs. 3 and 4 above, it is advantageously and efficiently possible to test the effect of multiple different values of the input parameter(s) of the 3-dimensional image reconstruction algorithm in one or at least only a limited number of executions of the 3-dimensional image reconstruction algorithm. As a result, in exemplary embodiments, a computational burden and computation time compared to commonly known iterative reconstruction processes can be significantly reduced, while utilizing the similar reliable and efficient underlying 3-dimensional image reconstruction algorithm.

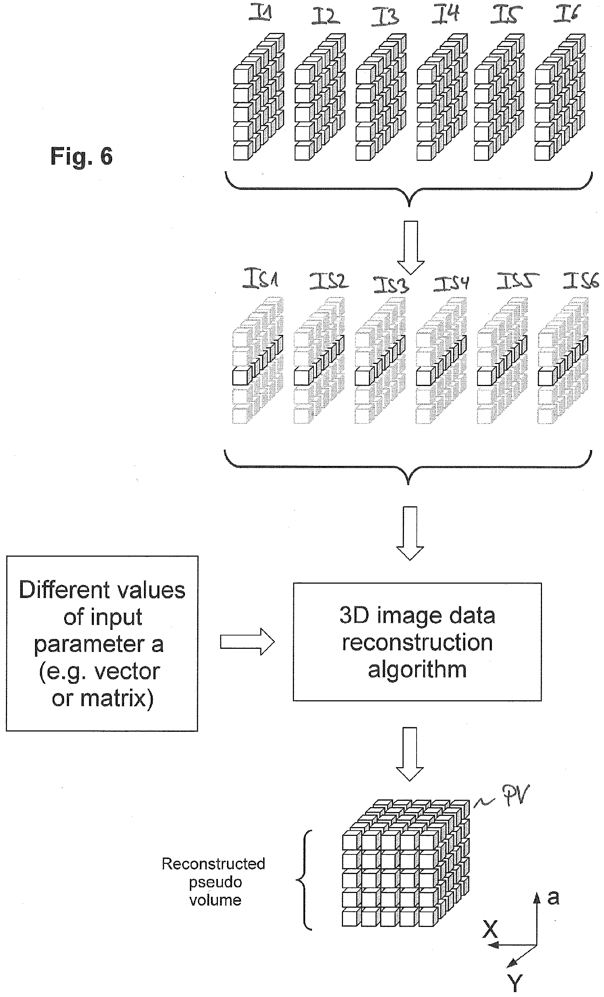

Fig. 6 exemplarily illustrates a concept of computed-tomography-based image reconstruction of 3-dimensional image data of an object according to exemplary embodiments.

For example, while again multiple 2-dimensional images, e.g. images I1, I2, I3, I4, I5 and I6, exemplarily, are obtained at multiple different relative angular positions of the assembly of the light source S and the detector D relative with respect to the object P to be measured, only limited data of the multiple 2-dimensional images is used, e.g. according to a projection DS of the base slice BS through the object onto the detector surface of the detector D.

Exemplarily, in Fig. 6, it is assumed that the a projection DS of the base slice BS through the object onto the detector surface of the detector D results in one row of pixels being extracted from each of the images, so as to obtain image data sections IS1, IS2, IS3, IS4, IS5 and IS6, exemplarily only containing data of one pixel row (e.g. in case of a cone-beam geometry), and the execution of the 3-dimensional image reconstruction algorithm is based on the extracted image data sections IS1, IS2, IS3, IS4, IS5 and IS6 instead of the full image data of the images I1, I2, I3, I4, I5 and I6.

Herein, in some exemplary embodiments, the 3-dimensional image reconstruction algorithm may be configured to receive the full image data of the images I1, I2, I3, I4, I5 and I6 and be further configured to extract the information of respective image data sections IS1, IS2, IS3, IS4, IS5 and IS6, from the image data of the images I1, I2, I3, I4, I5 and I6, during execution of the 3-dimensional image reconstruction algorithm, e.g. based on the determined location of the base slice BS, based on a pre-determined pixel row location, and/or based on a pre-defined data extraction algorithm.

In other exemplary embodiments, modified images may be input into the 3-dimensional image reconstruction algorithm, wherein the modified image data may be created based on the image data of the images I1, I2, I3, I4, I5 and I6. For example, for each of the images I1, I2, I3, I4, I5 and I6, a respective number of one or more pixel rows may be read, and new image data may be assembled by stacking the same read pixel row(s) in the pixel column direction.

For example, e.g. again in case of 5 times 5 pixels per image, the pixel values p_ijk of an image I_i (i={1,2,3,4,5,6}) with pixel rows j (j={1,2,3,4,5}) and pixel columns k (k={1,2,3,4,5}), if the pixel row to be extracted is, e.g. pixel row with j=3, then the corresponding modified image J_i (i={1,2,3,4,5,6}) may be created with pixel values q_ijk=p_i3k, i.e. repeating in each pixel row the third pixel row of the corresponding unmodified image I_i.

Then, in some exemplary embodiments, the modified image data of the modified images may be used as input data for the 3-dimensional image reconstruction algorithm.

Furthermore, instead of only inputting a single value of the input parameter of the 3-dimensional image reconstruction algorithm as in the iterative reconstruction described above, multiple values of the input parameter of the 3-dimensional image reconstruction algorithm can be input to the 3-dimensional image reconstruction algorithm.

For example, the input parameter values can be inputted as a vector of a vector dimension being equal to the number of slices of the pseudo volume PV, each vector entry corresponding to another value of the same input parameter to the 3-dimensional image reconstruction algorithm.

Alternatively, for example, the input parameter values can be inputted as a matrix of a matrix dimension being equal to the number of slices of the pseudo volume PV times the number of slices of the pseudo volume PV, the matrix being a diagonal matrix and each diagonal matrix entry corresponding to another value of the same input parameter to the 3-dimensional image reconstruction algorithm.

Furthermore, exemplarily, the input can be only a maximum value and a minimum value, wherein the algorithm interpolates between the input maximum value and a minimum value to determine the interpolated different parameter value of the same input parameter to the 3-dimensional image reconstruction algorithm.

According to an underlying idea of exemplary embodiments of the invention, the 3-dimensional image reconstruction algorithm utilizes the different values of the same input parameter for the respective reconstruction of each of the slices of the pseudo volume (representing respectively the same base slice of the same sliced volume in the 3-dimensional spatial space).

Accordingly, without the requirement of iteratively repeating the execution of the 3-dimensional image reconstruction algorithm for different values of the input parameter(s), the effect of multiple different values of the input parameter(s) of the 3-dimensional image reconstruction algorithm can be tested in one or at least only a limited number of executions of the 3-dimensional image reconstruction algorithm. As a result, in exemplary embodiments, a computational burden and computation time compared to commonly known iterative reconstruction processes can be significantly reduced, while utilizing the similar reliable and efficient underlying 3-dimensional image reconstruction algorithm.

Then, based on an analysis of slices of the output reconstructed 3-dimensional image data, a best fitting optimized value of the input parameter can be determined, e.g. by observing image features, such as noise, blurriness and/or sharpness, of the slices of the output reconstructed 3-dimensional image data. This can be done manually by an operator, e.g. by visually observing slices of the output reconstructed 3-dimensional image data, or this can also be done automatically by analyzing the different slices of the output reconstructed 3-dimensional image data based on a pre-determined metric calculated for each slice of the output reconstructed 3-dimensional image data, and by then selecting the slice of the output reconstructed 3-dimensional image data which optimized the pre-determined metric (e.g. as an extremal value of the pre-determined metric).

By such procedure, an optimized value of the input parameter can be selected or identified, and the 3-dimensional image reconstruction algorithm can then be repeated with the selected / identified input parameter value with the original obtained images as image input, to generate the actual reconstructed 3-dimensional image data of the object.

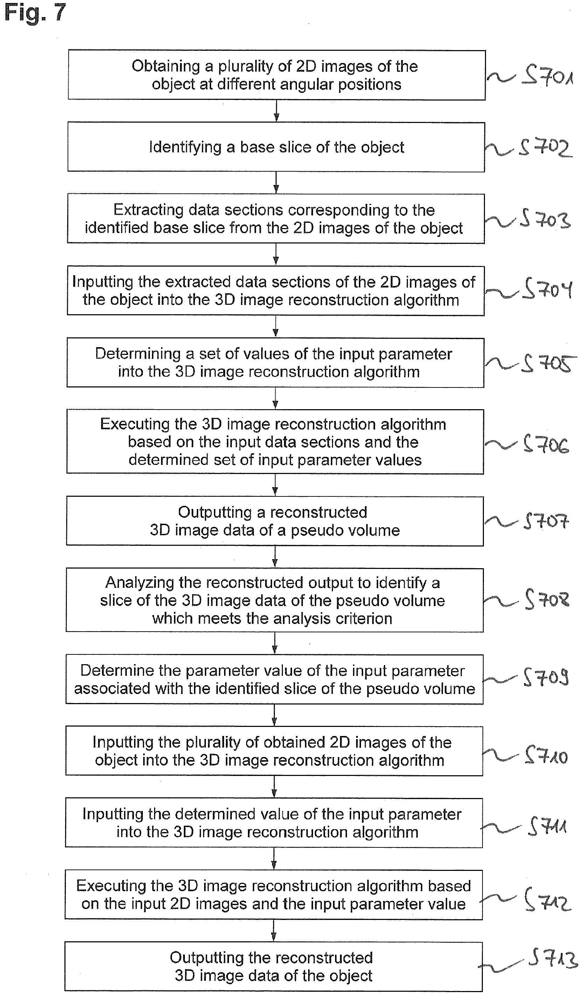

Fig. 7 exemplarily illustrates a process of computed-tomography-based image reconstruction of 3-dimensional image data of an object according to an exemplary embodiment.

In step S701 (similar to step S401 above), a plurality of 2-dimensional images of the object P to be measured are obtained at different angular positions of the assembly of the light source S and the detector D relative with respect to the object P to be measured.

In step S702, a base slice BS of the object P is determined or identified, e.g. as described above. The base slice BS defines a planar sliced volume of the object P to determine a projection DS of the base slice BS onto the detector surface of the detector D. In some exemplary embodiments, the area of the projection DS of the base slice BS onto the detector surface of the detector D (e.g. one or more pixel rows, as discussed above) can be pre-determined according to the characteristics and configuration of the measurement system, specifically preferably based on the beam shape geometry of the light source S and/or based on a geometrical arrangement of the light source S with respect to the detector D.

In step S703, data sections corresponding to the determined or identified base slice BS are extracted from the obtained 2-dimensional images obtained in step S701. For example, pixel values according to the projection DS of the base slice BS onto the detector surface of the detector D can be extracted.

In step S704, the extracted data sections are input into the 3-dimensional image reconstruction algorithm (e.g. as modified images or as extracted data section, as discussed above), wherein the extracted data sections of the 2-dimensional images relate to the same base slice BS through the object P.

In step S705, a set of values of the input parameter(s) of the 3-dimensional image reconstruction algorithm is determined, each value being associated with another slice of the pseudo volume PV.

In step S706, the 3-dimensional image reconstruction algorithm is executed based on the input extracted data sections of the obtained 2-dimensional images and the determined set of values of the input parameter(s) of the 3-dimensional image reconstruction algorithm.

In step S707, the reconstructed 3-dimensional image data of the pseudo volume PV is output, wherein each slice of the pseudo volume is reconstructed by the same extracted data sections of the obtained 2-dimensional images corresponding to the same base slice BS of the object P but with a different respective value of the set of values of the input parameter(s) of the 3-dimensional image reconstruction algorithm.

Accordingly, as discussed above, the third dimension of the output 3-dimensional image data of the pseudo volume PV does not represent a spatial dimension in the measurement system space but a 1-dimensional axis in the parameter space of the input parameter of the 3-dimensional image reconstruction algorithm. It is to be noted that the underlying 3-dimensional image reconstruction algorithm may be a true cone-beam or parallel-beam 3-dimensional image reconstruction algorithm, and/or may include the execution, preferably the parallel execution, of multiple 2-dimensional fan-beam reconstruction algorithms respectively performed for each slice of the pseudo volume PV, each 2-dimensional fan-beam reconstruction algorithm taking another value of the input parameter from the input / determined set of values as input.

In step S708, the output 3-dimensional image data of the pseudo volume PV is analyzed to identify a slice of the 3-dimensional image data of the pseudo volume PV which meets an analysis criteria.

For example, based on the analysis of slices of the output reconstructed 3-dimensional image data, a best fitting optimized value of the input parameter can be determined, e.g. by observing image features, such as noise, blurriness and/or sharpness, of the slices of the output reconstructed 3-dimensional image data. This can also be done automatically by analyzing the different slices of the output reconstructed 3-dimensional image data based on a pre-determined metric calculated for each slice of the output reconstructed 3-dimensional image data, and by then selecting the slice of the output reconstructed 3-dimensional image data which optimized the pre-determined metric (e.g. as an extremal value of the pre-determined metric).

Also, in addition or alternatively, this can be done manually by an operator, e.g. by visually observing slices of the output reconstructed 3-dimensional image data and selecting a visually satisfying image slice.

In step S709, the respective corresponding value of the input parameter associated with the identified slice of the 3-dimensional image data of the pseudo volume PV which meets an analysis criteria is determined.

Then, similar to steps S402, S404 and S405, the process includes the step S710 of inputting the plural (originally) obtained 2-dimensional images of the object P as image data input into the 3-dimensional image reconstruction algorithm, the step S711 of inputting the value of the input parameter determined in step S709 into the 3-dimensional image reconstruction algorithm, and the step S712 of executing the 3-dimensional image reconstruction algorithm based on the plural (originally) obtained 2-dimensional images of the object P and the input value of the input parameter determined in step S709.

Then, as output of the 3-dimensional image reconstruction algorithm executed in step S712, the reconstructed 3-dimensional image data of the object P is output as the final reconstructed 3-dimensional image data of the object P in step S713 and the process ends.

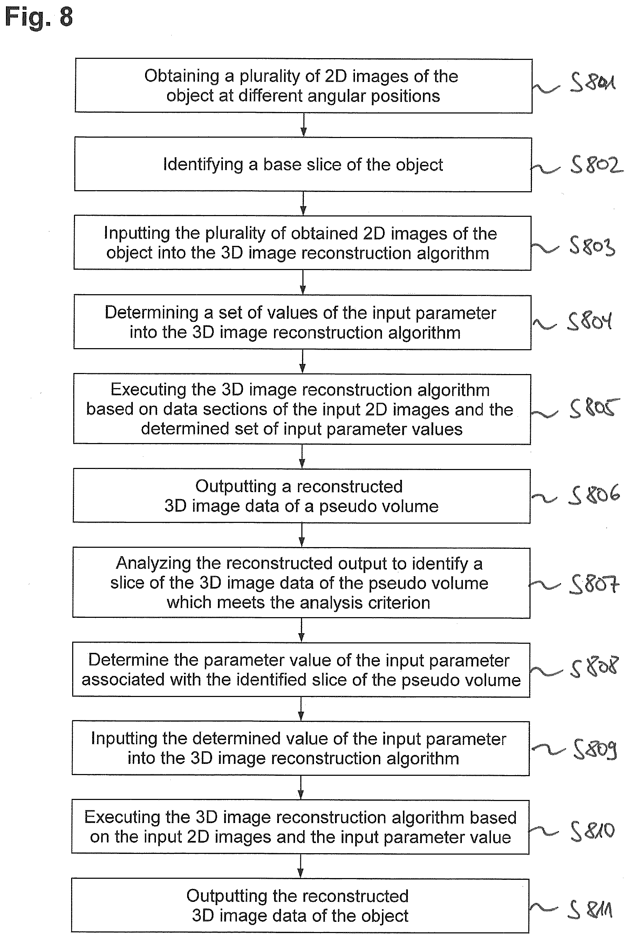

Fig. 8 exemplarily illustrates a process of computed-tomography-based image reconstruction of 3-dimensional image data of an object according to another exemplary embodiment.

In step S801 (similar to step S401 or S701 above), a plurality of 2-dimensional images of the object P to be measured are obtained at different angular positions of the assembly of the light source S and the detector D relative with respect to the object P to be measured.

In step S802 (similar to step S702 above), a base slice BS of the object P is determined or identified, e.g. as described above. The base slice BS defines a planar sliced volume of the object P to determine a projection DS of the base slice BS onto the detector surface of the detector D. In some exemplary embodiments, the area of the projection DS of the base slice BS onto the detector surface of the detector D (e.g. one or more pixel rows, as discussed above) can be pre-determined according to the characteristics and configuration of the measurement system, specifically preferably based on the beam shape geometry of the light source S and/or based on a geometrical arrangement of the light source S with respect to the detector D.

In step S803 (similar to step S402 above), the obtained 2-dimensional images obtained in step S801 are input as input image data into the 3-dimensional image data reconstruction algorithm.

In step S804 (similar to step S705 above), a set of values of the input parameter(s) of the 3-dimensional image reconstruction algorithm is determined, each value being associated with another slice of the pseudo volume PV.

In step S805 (similar to step S706 above), the 3-dimensional image reconstruction algorithm is executed based on extracted data sections of the obtained 2-dimensional images and the determined set of values of the input parameter(s) of the 3-dimensional image reconstruction algorithm.

However, herein it is exemplarily assumed that the 3-dimensional image reconstruction algorithm is itself configured to automatically extract the data sections corresponding to the determined or identified base slice BS from the input 2-dimensional images obtained. For example, pixel values according to the projection DS of the base slice BS onto the detector surface of the detector D can be extracted.

In step S806 (similar to step S707 above), the reconstructed 3-dimensional image data of the pseudo volume PV is output, wherein each slice of the pseudo volume is reconstructed by the same extracted data sections of the obtained 2-dimensional images corresponding to the same base slice BS of the object P but with a different respective value of the set of values of the input parameter(s) of the 3-dimensional image reconstruction algorithm.

Accordingly, as discussed above, the third dimension of the output 3-dimensional image data of the pseudo volume PV does not represent a spatial dimension in the measurement system space but a 1-dimensional axis in the parameter space of the input parameter of the 3-dimensional image reconstruction algorithm. It is to be noted that the underlying 3-dimensional image reconstruction algorithm may be a true cone-beam or parallel-beam 3-dimensional image reconstruction algorithm, and/or may include the execution, preferably the parallel execution, of multiple 2-dimensional fan-beam reconstruction algorithms respectively performed for each slice of the pseudo volume PV, each 2-dimensional fan-beam reconstruction algorithm taking another value of the input parameter from the input/ determined set of values as input.

In step S807 (similar to step S708 above), the output 3-dimensional image data of the pseudo volume PV is analyzed to identify a slice of the 3-dimensional image data of the pseudo volume PV which meets an analysis criteria.

For example, based on the analysis of slices of the output reconstructed 3-dimensional image data, a best fitting optimized value of the input parameter can be determined, e.g. by observing image features, such as noise, blurriness and/or sharpness, of the slices of the output reconstructed 3-dimensional image data. This can also be done automatically by analyzing the different slices of the output reconstructed 3-dimensional image data based on a pre-determined metric calculated for each slice of the output reconstructed 3-dimensional image data, and by then selecting the slice of the output reconstructed 3-dimensional image data which optimized the pre-determined metric (e.g. as an extremal value of the pre-determined metric).

Also, in addition or alternatively, this can be done manually by an operator, e.g. by visually observing slices of the output reconstructed 3-dimensional image data and selecting a visually satisfying image slice.

In step S808 (similar to step S709 above), the respective corresponding value of the input parameter associated with the identified slice of the 3-dimensional image data of the pseudo volume PV which meets an analysis criteria is determined.

Then, similar to steps S711 and S712 above, the process includes the step S809 of inputting the value of the input parameter determined in step S808 into the 3-dimensional image reconstruction algorithm, and the step S810 of executing the 3-dimensional image reconstruction algorithm based on the plural (originally) obtained 2-dimensional images of the object P and the input value of the input parameter determined in step S808.

Then, as output of the 3-dimensional image reconstruction algorithm executed in step S810, the reconstructed 3-dimensional image data of the object P is output as the final reconstructed 3-dimensional image data of the object P in step S811 and the process ends.

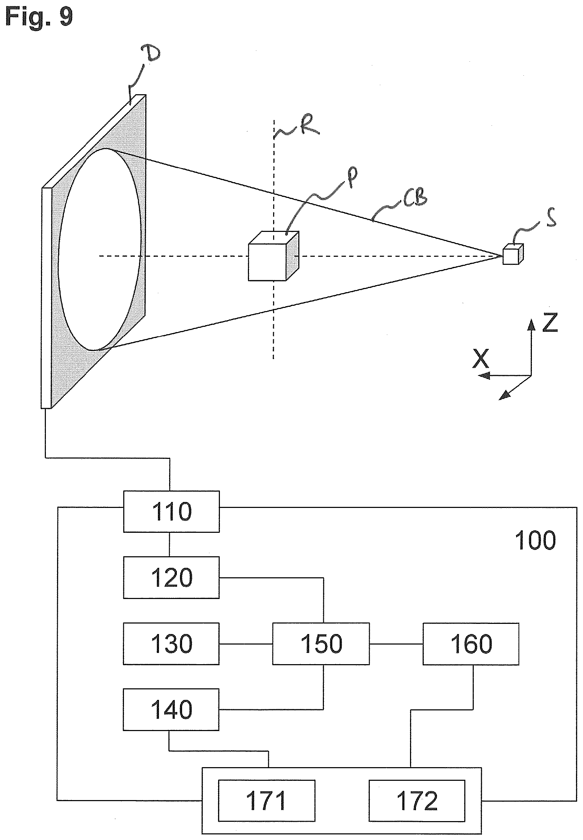

Fig. 9 exemplarily illustrates a schematic view of a measurement system including an apparatus for computed-tomography-based image reconstruction of 3-dimensional image data of an object according to exemplary embodiments.

Similar to Fig. 1, the measurement system includes a light source S, in particular an X-ray source, and a 2-dimenstional image detector D arranged opposite to the light source S. Exemplarily, an object P to be measured is arranged between the light source S and the detector D on a line L extending between the light source S and the detector.

Exemplarily, the light source S is configured to emit light, in particular X-ray light, towards the detector D in a cone-beam-shaped beam geometry (cone beam geometry). That is, the light beam CB emitted from the light source S exemplarily has a conical shape ("cone beam") and exemplarily a circular area of the beam CB hits a planar detector surface of the detector D.

However, the invention is not limited to the use of a light source S emitting light towards the detector D in a cone-beam-shaped beam geometry, but in other exemplary embodiments also light sources having other beam geometries may be used, such as e.g. light sources which emit light, in particular X-ray light, towards the detector D in a parallel-beam-shaped beam geometry (parallel beam geometry).

In Fig. 9, the detector D is exemplarily shown as having a planar detection surface, however, the invention is not limited to the use of detectors having a planar detection surface, but also detectors having curved detection surfaces can be used in exemplary embodiments of the invention.

As previously mentioned, for computed-tomography-based measurements, typically plural 2-dimensional images of the object to be measured are taken from different viewpoints (viewing directions) at different angular positions of the object. This may be achieved by rotating the object between the stationary assembly of light source and detector or by keeping the object stationary and rotating the assembly of light source and detector about a rotational axis extending through the object.

It is to be noted that the invention is not limited to any of the above, and 2-dimensional images of the object from different viewpoints (viewing directions) at different angular positions of the object can be obtained in exemplary embodiments of the invention by rotating the object between the stationary assembly of light source and detector and/or by rotating the assembly of light source and detector about a rotational axis extending through the object.

Furthermore, the measurement system includes an apparatus 100 for image reconstruction of an object, in particular based on one, more or all of the above aspects. The apparatus 100, which may be implemented in a computer or computer-implemented CT controller, is exemplarily communicably connected, e.g. via a wired or wireless communication connection, via a detector communication interface 110 with the detector D to receive image data from the detector D.

The apparatus 100 further includes a 2-dimensional image data storage section 120 configured to store 2-dimensional image data, such as multiple obtained 2-dimensional images, received from the detector D via the detector communication interface 110.

Furthermore, the apparatus 100 includes an image reconstruction algorithm data storage section 130 configured to store computer program instructions for executing one or more pre-determined image reconstruction algorithms, such as one or more of the 3-dimensional image reconstruction algorithms discussed above.

Furthermore, the apparatus 100 includes an input parameter data storage section 140 configured to store pre-determined values and/or value sets of one or more input parameters of the image reconstruction algorithm(s) stored in the image reconstruction algorithm data storage section 130.

The apparatus 100 further exemplarily includes a processing unit 150 (e.g. including one or more processors, central processing units, graphical processing units, and/or programmable logical circuits) configured to execute the image reconstruction algorithm(s) stored in the image reconstruction algorithm data storage section 130 based on the image data stored in the 2-dimensional image data storage section 120 and/or the parameter data stored in the input parameter data storage section 140.

The apparatus 100 further exemplarily includes a 3-dimensional image data storage section 160 configured to store reconstructed 3-dimensional image data output from the execution of the image reconstruction algorithm(s) executed by the processing unit 150.

Furthermore, the apparatus 100 includes a input/output interface including an input interface 171 configured to allow an operator to input instructions, data, values and other user activities and an output interface 172 configured to output information to the operator.

The input interface 171 may include a keyboard, a mouse, a touch screen, buttons, and sensors to receive voice instructions and/or visual instructions such as hand gestures or the like. The output interface 172 may include a display, a loudspeaker, a touch screen, etc.

The input/output interface may also include a logical user interface such as e.g. a graphical user interface (GUI) and/or a command line interface (CLI), etc.

As will be appreciated by one of skill in the art, the present invention, as described hereinabove and the accompanying figures, is embodied as a method (e.g., a computer-implemented process, or any other process), control apparatus (including a device, machine, system, computer program product, and/or any other apparatus), or a combination of the foregoing.

Accordingly, embodiments of the present invention may take the form of an entirely hardware embodiment, an entirely software embodiment (including firmware, resident software, micro-code, etc.), or an embodiment combining software and hardware aspects that may generally be referred to herein as a "system". Furthermore, embodiments of the present invention may take the form of a computer program product on a computer-readable medium having computer-executable program code embodied in the medium.

Embodiments of the present invention are described hereinabove with reference to flowchart illustrations and/or block diagrams of methods and apparatuses. It will be understood that each block of the flowchart illustrations and/or block diagrams, and/or combinations of blocks in the flowchart illustrations and/or block diagrams can be implemented by computer-executable program code.

The computer-executable program code may be provided to a processor of a general purpose computer, special purpose computer, or other programmable data processing apparatus, such as e.g. a controller, to produce a particular machine, such that the program code, which executes via the processor of the computer or other programmable data processing apparatus, create means for implementing the functions/acts/outputs specified in the flowchart, block diagram block or blocks, figures, and/or written description. These computer-executable program code may also be stored in a computer-readable memory that can direct a computer or other programmable data processing apparatus to function in a particular manner, such that the program code stored in the computer readable memory produce an article of manufacture including instruction means which implement the function/act/output specified in the flowchart, block diagram block(s), figures, and/or written description. The computer-executable program code may also be loaded onto a computer or other programmable data processing apparatus to cause a series of operational steps to be performed on the computer or other programmable apparatus to produce a computer-implemented process such that the program code which executes on the computer or other programmable apparatus provides steps for implementing the functions/acts/outputs specified in the flowchart, block diagram block(s), figures, and/or written description. Alternatively, computer program implemented steps or acts may be combined with operator or human implemented steps or acts in order to carry out an embodiment of the invention.

It should also be noted that logic flows may be described herein to demonstrate various aspects of the invention, and should not be construed to limit the present invention to any particular logic flow or logic implementation. The described logic may be partitioned into different logic blocks (e.g., programs, modules, functions, or subroutines) without changing the overall results or otherwise departing from the true scope of the invention. Often times, logic elements may be added, modified, omitted, performed in a different order, or implemented using different logic constructs (e.g., logic gates, looping primitives, conditional logic, and other logic constructs) without changing the overall results or otherwise departing from the true scope of the invention.

While certain exemplary embodiments have been described and shown in the accompanying drawings, it is to be understood that such embodiments are merely illustrative of and are not restrictive on the broad invention, and that the embodiments of invention are not limited to the specific constructions and arrangements shown and described, since various other changes, combinations, omissions, modifications and substitutions, in addition to those set forth in the above paragraphs, are possible. Those skilled in the art will appreciate that various adaptations, modifications, and/or combination of the just described embodiments can be configured without departing from the scope and spirit of the invention. Therefore, it is to be understood that, within the scope of the appended claims, the invention may be practiced other than as specifically described herein. For example, unless expressly stated otherwise, the steps of processes described herein may be performed in orders different from those described herein and one or more steps may be combined, split, or performed simultaneously. Those skilled in the art will also appreciate, in view of this disclosure, that different embodiments of the invention described herein may be combined to form other embodiments of the invention, as long as these do not deviate from the scope of the invention as provided by the appended claims.

## Claims

1. Computer-implemented method for computed-tomography image reconstruction of an object, comprising:
- obtaining (S701; S801) a plurality of (N-1)-dimensional images of the object, with N = 3 or N = 4, the plurality of (N-1)-dimensional images of the object being obtained at different angular positions relative with respect to the object arranged on a line between a light source and a 2-dimensional image detector in case of N = 3 or N = 4 or a 3-dimensional image detector in case of N = 4; and
- reconstructing N-dimensional image data based on an image reconstruction algorithm which uses, as input, data of the plurality of (N-1)-dimensional images of the object and at least one input parameter;
wherein the image reconstruction algorithm is executed (S706; S805) based on the plurality of (N-1)-dimensional images of the object and a determined set of values of the at least one input parameter to output (S707; S806) reconstructed N-dimensional image data of an N-dimensional pseudo-object, the N-dimensional pseudo-object being represented by a stack of a plurality of slices,
wherein each slice of the plurality of slices of the pseudo-object is associated with a same base slice of the object and is reconstructed by the same extracted data sections of the obtained (N-1)-dimensional images corresponding to the same base slice of the object but with a different value of the determined set of values of the at least one input parameter as input to the image reconstruction algorithm, wherein the base slice is a 2-dimensional planar slice through the object; and
wherein final N-dimensional image data of the object is reconstructed (S712, S713; S810, S811) based on the image reconstruction algorithm using, as input, the plurality of obtained (N-1)-dimensional images of the object and a certain value of the at least one input parameter being selected based on the N-dimensional image data of the N-dimensional pseudo-object.

2. Method according to claim 1, **characterized in that**
the plurality of (N-1)-dimensional images are obtained from different viewpoints with respect to a rotational axis being arranged in the Z-direction, and
the base slice of the object is arranged substantially along a 2-dimensional X-Y plane through the object perpendicular to the rotation axis.

3. Method according to claim 2, **characterized in that**
the N-dimensional pseudo-object is represented by the stack of the plurality of slices being stacked in the Z-direction.

4. Method according to at least one of the preceding claims, **characterized by**
- extracting (S703) sliced image data from each of the plural obtained (N-1)-dimensional images, each sliced image data representing one or more adjacent pixel rows of the respective obtained (N-1)-dimensional image; and
- generating, for each of the plural obtained (N-1)-dimensional images, a respective modified (N-1)-dimensional image by stacking the respective extracted sliced image data of the respective obtained (N-1)-dimensional image multiple times, in particular in a pixel row direction or in a pixel column direction;
wherein the N-dimensional image data is reconstructed based on the image reconstruction algorithm which uses, as input, data of the plurality of modified (N-1) dimensional images.

5. Method according to at least one of the preceding claims, wherein
selecting the certain value of the at least one input parameter based on the N-dimensional image data of the N-dimensional pseudo-object includes:
- calculating, for each slice of the pseudo-object, a respective metric parameter based on applying a pre-determined metric calculation algorithm to (N-1)-dimensional image data of a respective planar section of the N-dimensional image data associated with the respective slice of the pseudo-object, and
- identifying the respective slice of the pseudo-object for which the respective metric parameter has its extremal value, and
- identifying the respective input value of the at least one input parameter used for reconstructing the respective planar section of the N-dimensional image data associated with the identified respective slice of the pseudo-object as the selected certain value of the at least one input parameter.

6. Method according to at least one of the preceding claims, **characterized in that** the at least one input parameter represents:
- a weight parameter for defining a weight of a data term and a regularization term according to an iterative image reconstruction algorithm;
- a penalty function parameter used in a penalty function for a regularization term according to an iterative image reconstruction algorithm;
- a center shift parameter indicative of a shift of an actual rotational axis of the measurement system with respect to a target rotational axis of the measurement system;
- a correction parameter indicative of a beam-hardening correction;
- an artifact correction parameter for correcting image artifacts;
- a filter parameter used in an image filter applied to (N-1)-dimensional images; and/or
- a weight factor weighting different image source energies in Dual-Energy-CT image reconstruction.

7. Apparatus for computed-tomography image reconstruction of an object,
the apparatus comprising:
- an interface (110) configured to receive data indicative of a plurality of (N-1) dimensional images of the object, with N = 3 or N = 4, the plurality of (N-1)-dimensional images of the object being obtained at different angular positions relative with respect to the object arranged on a line between a light source and a 2-dimensional image detector in case of N = 3 or N = 4 or a 3-dimensional image detector in case of N = 4; and
- an image reconstruction unit (150) configured to reconstruct N-dimensional image data based on an image reconstruction algorithm which uses, as input, data of the plurality of (N-1)-dimensional images of the object and at least one input parameter;
wherein the image reconstruction unit (150) is configured to execute the image reconstruction algorithm based on the plurality of (N-1)-dimensional images of the object and a determined set of values of the at least one input parameter to output N-dimensional image data of an N-dimensional pseudo-object, the N-dimensional pseudo-object being represented by a stack of a plurality of slices,
wherein each slice of the plurality of slices of the pseudo-object is associated with a same base slice of the object and is reconstructed by the same extracted data sections of the obtained (N-1)-dimensional images corresponding to the same base slice of the object but with a different value of the determined set of values of the at least one input parameter as input to the image reconstruction algorithm, wherein the base slice is a 2-dimensional planar slice through the object; and
wherein the image reconstruction unit (150) is configured to reconstruct final N-dimensional image data of the object based on the image reconstruction algorithm using, as input, the plurality of obtained (N-1)-dimensional images of the object and a certain value of the at least one input parameter being selected based on the N-dimensional image data of the N-dimensional pseudo-object.

8. Apparatus according to claim 7, wherein the apparatus is configured to execute a method of at least one of claims 2 to 6.

9. System for computed-tomography image reconstruction of an object, comprising:
- a light source (S),
- a 2-dimensional image detector (D) or a 3-dimensional image detector, and
- an apparatus (100) according to claim 7 or 8.

10. Computer program product, including a computer program including computer program instructions, which, when executed by a computer, processor or computed-tomography controller, cause the computer, processor or computed-tomography controller to perform the steps of a method of any of the claims 1 to 6.

## Patentansprüche

1. Computerimplementiertes Verfahren zur Computertomographie-Bildrekonstruktion eines Objekts, umfassend:
- Erhalten (S701; S801) einer Vielzahl von (N-1)-dimensionalen Bildern des Objekts, wobei N = 3 oder N = 4 ist, wobei die Vielzahl von (N-1)-dimensionalen Bildern des Objekts an verschiedenen Winkelpositionen, die auf einer Linie zwischen einer Lichtquelle und einem zweidimensionalen Bilddetektor im Fall von N = 3 oder N = 4 oder einem dreidimensionalen Bilddetektor im Fall von N = 4 angeordnet sind, relativ zum Objekt aufgenommen wird; und
- Rekonstruieren von N-dimensionalen Bilddaten auf der Grundlage eines Bildrekonstruktionsalgorithmus, der als Eingabe Daten der mehreren (N-1)-dimensionalen Bilder des Objekts und mindestens einen Eingabeparameter verwendet;
wobei der Bildrekonstruktionsalgorithmus auf der Grundlage der mehreren (N-1)-dimensionalen Bilder des Objekts und eines bestimmten Wertesatzes des mindestens einen Eingabeparameters ausgeführt wird (S706; S805), um rekonstruierte N-dimensionale Bilddaten eines N-dimensionalen Pseudoobjekts auszugeben (S707; S806), wobei das N-dimensionale Pseudoobjekt durch einen Stapel aus mehreren Schichten dargestellt wird,
wobei jede der mehreren Schichten des Pseudoobjekts einer gleichen Basisschicht des Objekts zugeordnet ist und durch dieselben extrahierten Datenabschnitte der erhaltenen (N-1)-dimensionalen Bilder rekonstruiert wird, die derselben Basisschicht des Objekts entsprechen, jedoch mit einem unterschiedlichen Wert aus dem bestimmten Wertesatz des mindestens einen Eingabeparameters als Eingabe für den Bildrekonstruktionsalgorithmus, wobei die Basisschicht eine zweidimensionale, ebene Schicht durch das Objekt ist; und
wobei endgültige N-dimensionale Bilddaten des Objekts auf der Grundlage des Bildrekonstruktionsalgorithmus rekonstruiert werden (S712, S713; S810, S811), wobei als Eingabe die Vielzahl der erhaltenen (N-1)-dimensionalen Bilder des Objekts und ein bestimmter Wert des mindestens einen Eingabeparameters, der auf der Grundlage der N-dimensionalen Bilddaten des N-dimensionalen Pseudoobjekts ausgewählt wird, verwendet werden.

2. Verfahren nach Anspruch 1, **dadurch gekennzeichnet, dass**
die mehreren (N-1)-dimensionalen Bilder aus unterschiedlichen Blickwinkeln in Bezug auf eine in Z-Richtung angeordnete Drehachse aufgenommen werden und
die Basisschicht des Objekts im Wesentlichen entlang einer zweidimensionalen X-Y-Ebene durch das Objekt senkrecht zur Drehachse angeordnet ist.

3. Verfahren nach Anspruch 2, **dadurch gekennzeichnet, dass**
das N-dimensionale Pseudoobjekt durch den Stapel der mehreren in Z-Richtung gestapelten Schichten dargestellt wird.

4. Verfahren nach mindestens einem der vorstehenden Ansprüche, **gekennzeichnet durch**
- Extrahieren (S703) von Schnittbilddaten aus jedem der mehreren erhaltenen (N-1)-dimensionalen Bilder, wobei jede Schnittbilddaten eine oder mehrere benachbarte Pixelreihen des jeweiligen erhaltenen (N-1)-dimensionalen Bildes darstellen; und
- Erzeugen eines jeweiligen modifizierten (N-1)-dimensionalen Bildes für jedes der mehreren erhaltenen (N-1)-dimensionalen Bilder durch mehrmaliges Stapeln der jeweiligen extrahierten Bildausschnittdaten des jeweiligen erhaltenen (N-1)-dimensionalen Bildes, insbesondere in einer Pixelreihenrichtung oder in einer Pixelspaltenrichtung;
wobei die N-dimensionalen Bilddaten auf der Grundlage des Bildrekonstruktionsalgorithmus, der als Eingabe Daten der mehreren modifizierten (N-1)-dimensionalen Bilder verwendet, rekonstruiert werden.

5. Verfahren gemäß mindestens einem der vorstehenden Ansprüche, wobei
die Auswahl des bestimmten Werts des mindestens einen Eingabeparameters auf der Grundlage der N-dimensionalen Bilddaten des N-dimensionalen Pseudoobjekts Folgendes umfasst:
- Berechnen eines jeweiligen Metrikparameters für jede Schicht des Pseudoobjekts auf der Grundlage der Anwendung eines vorbestimmten Metrikberechnungsalgorithmus auf (N-1)-dimensionale Bilddaten eines jeweiligen planaren Abschnitts der N-dimensionalen Bilddaten, die der jeweiligen Schicht des Pseudoobjekts zugeordnet sind, und
- Identifizieren der jeweiligen Schicht des Pseudoobjekts, für die der jeweilige Metrikparameter seinen Extremwert aufweist, und
- Identifizieren des jeweiligen Eingabewerts des mindestens einen Eingabeparameters, der zur Rekonstruktion des jeweiligen planaren Ausschnitts der N-dimensionalen Bilddaten verwendet wird, die der identifizierten jeweiligen Schicht des Pseudoobjekts zugeordnet sind, als den ausgewählten bestimmten Wert des mindestens einen Eingabeparameters.

6. Verfahren gemäß mindestens einem der vorstehenden Ansprüche, **dadurch gekennzeichnet, dass** der mindestens eine Eingabeparameter Folgendes darstellt:
- einen Gewichtungsparameter zur Definition eines Gewichts eines Datenterms und eines Regularisierungsterms gemäß einem iterativen Bildrekonstruktionsalgorithmus;
- einen Straffunktionsparameter, der in einer Straffunktion für einen Regularisierungsterm gemäß einem iterativen Bildrekonstruktionsalgorithmus verwendet wird;
- einen Zentrumsverschiebungsparameter, der eine Verschiebung einer tatsächlichen Drehachse des Messsystems gegenüber einer Soll-Drehachse des Messsystems angibt;
- einen Korrekturparameter, der eine Strahlverhärtungskorrektur angibt;
- einen Artefaktkorrekturparameter zur Korrektur von Bildartefakten;
- einen Filterparameter, der in einem auf (N-1)-dimensionale Bilder angewendeten Bildfilter verwendet wird; und/oder
- einen Gewichtungsfaktor, der verschiedene Bildquellenenergien bei der Bildrekonstruktion in der Dual-Energy-CT gewichtet.

7. Vorrichtung zur Computertomographie-Bildrekonstruktion eines Objekts, wobei die Vorrichtung umfasst:
- eine Schnittstelle (110), die dazu eingerichtet ist, Daten zu empfangen, die eine Vielzahl von (N-1)-dimensionalen Bildern des Objekts angeben, wobei N = 3 oder N = 4 ist, wobei die Vielzahl von (N-1)-dimensionalen Bildern des Objekts an verschiedenen Winkelpositionen, die auf einer Linie zwischen einer Lichtquelle und einem zweidimensionalen Bilddetektor im Fall von N = 3 oder N = 4 oder einem dreidimensionalen Bilddetektor im Fall von N = 4 angeordnet sind, relativ zum Objekt aufgenommen wird; und
- eine Bildrekonstruktionseinheit (150), die dazu eingerichtet ist, N-dimensionale Bilddaten auf der Grundlage eines Bildrekonstruktionsalgorithmus, der als Eingabe Daten der mehreren (N-1)-dimensionalen Bilder des Objekts und mindestens einen Eingabeparameter verwendet, zu rekonstruieren;
wobei die Bildrekonstruktionseinheit (150) dazu eingerichtet ist, den Bildrekonstruktionsalgorithmus auf der Grundlage der mehreren (N-1)-dimensionalen Bilder des Objekts und eines bestimmten Wertesatzes des mindestens einen Eingabeparameters auszuführen, um N-dimensionale Bilddaten eines N-dimensionalen Pseudoobjekts auszugeben, wobei das N-dimensionale Pseudoobjekt durch einen Stapel aus mehreren Schichten dargestellt wird,
wobei jede der mehreren Schichten des Pseudoobjekts einer gleichen Basisschicht des Objekts zugeordnet ist und durch dieselben extrahierten Datenabschnitte der erhaltenen (N-1)-dimensionalen Bilder rekonstruiert wird, die derselben Basisschicht des Objekts entsprechen, jedoch mit einem unterschiedlichen Wert aus dem bestimmten Wertesatz des mindestens einen Eingabeparameters als Eingabe für den Bildrekonstruktionsalgorithmus, wobei die Basisschicht eine zweidimensionale, ebene Schicht durch das Objekt ist; und
wobei die Bildrekonstruktionseinheit (150) dazu eingerichtet ist, endgültige N-dimensionale Bilddaten des Objekts auf der Grundlage des Bildrekonstruktionsalgorithmus zu rekonstruieren, wobei als Eingabe die Vielzahl der erhaltenen (N-1)-dimensionalen Bilder des Objekts und ein bestimmter Wert des mindestens einen Eingabeparameters, der auf der Grundlage der N-dimensionalen Bilddaten des N-dimensionalen Pseudoobjekts ausgewählt wird, verwendet werden.

8. Vorrichtung nach Anspruch 7, wobei die Vorrichtung dazu eingerichtet ist, ein Verfahren nach mindestens einem der Ansprüche 2 bis 6 auszuführen.

9. System zur Computertomographie-Bildrekonstruktion eines Objekts, umfassend:
- eine Lichtquelle (S),
- einen zweidimensionalen Bilddetektor (D) oder einen dreidimensionalen Bilddetektor, und
- eine Vorrichtung (100) gemäß Anspruch 7 oder 8.

10. Computerprogrammprodukt, umfassend ein Computerprogramm, das Computerprogrammbefehle enthält, die, wenn sie von einem Computer, einem Prozessor oder einer Computertomographie-Steuerung ausgeführt werden, den Computer, den Prozessor oder die Computertomographie-Steuerung dazu veranlassen, die Schritte eines Verfahrens gemäß einem der Ansprüche 1 bis 6 auszuführen.

## Revendications

1. Procédé mis en œuvre par ordinateur pour la reconstruction d'images tomodensitométriques d'un objet comportant les étapes suivantes :
- l'obtention (S701; S801) d'une pluralité d'images en (N-1) dimensions de l'objet, où N = 3 ou N = 4, la pluralité d'images en (N-1) dimensions de l'objet étant obtenue à différentes positions angulaires par rapport à l'objet disposées sur une ligne entre une source lumineuse et un détecteur d'images en 2 dimensions dans le cas où N = 3 ou N = 4, ou un détecteur d'images en 3 dimensions dans le cas où N = 4; et
- la reconstruction de données d'images en N dimensions à l'aide d'un algorithme de reconstruction d'image qui utilise, comme entrée, des données de la pluralité d'images en (N-1) dimensions de l'objet et au moins un paramètre d'entrée;
l'algorithme de reconstruction d'image étant exécuté (S706; S805) sur la base de la pluralité d'images en (N-1) dimensions de l'objet et un ensemble de valeurs déterminé de l'au moins un paramètre d'entrée pour sortir (S707; 5806) des données d'image en N dimensions reconstruites d'un pseudo-objet en N dimensions, le pseudo-objet en N dimensions étant représenté par une pile d'une pluralité de coupes,
chaque coupe de la pluralité de coupes du pseudo-objet étant associée à une même coupe de base de l'objet et reconstruite à partir des mêmes sections de données extraites des images en (N-1) dimensions obtenues correspondant à la même coupe de base de l'objet, mais avec une valeur différente de l'ensemble de valeurs déterminé de l'au moins un paramètre d'entrée comme entrée de l'algorithme de reconstruction d'image, la coupe de base étant une coupe plane en 2 dimensions traversant l'objet; et
les données d'image finales en N dimensions de l'objet étant reconstruites (S712, S713; S810, S811) à l'aide de l'algorithme de reconstruction d'image en utilisant, en entrée, la pluralité d'images en (N-1) dimensions obtenues de l'objet et une valeur déterminée de l'au moins un paramètre d'entrée sélectionnée sur la base des données d'image en N dimensions du pseudo-objet en N dimensions.

2. Procédé selon la revendication 1, **caractérisé en ce que**
la pluralité d'images en (N-1) dimensions est obtenue à partir de différents points de vue par rapport à un axe de rotation disposé dans la direction Z, et
la coupe de base de l'objet s'étend sensiblement le long d'un plan en 2 dimensions X-Y passant par l'objet et perpendiculaire à l'axe de rotation.

3. Procédé selon la revendication 2, **caractérisé en ce que** le pseudo-objet à N dimensions est représenté par la superposition d'une pluralité de coupes empilées dans la direction Z.

4. Procédé selon au moins l'une des revendications précédentes, **caractérisé en ce qu'**il comporte les étapes suivantes :
- l'extraction (S703) des données d'images coupées de chacune de la pluralité d'images en (N-1) dimensions obtenues, chaque donnée d'image coupée représentant une ou plusieurs lignes de pixels adjacentes de l'image en (N-1) dimensions respective obtenue; et
- la génération, pour chacune des images en (N-1) dimensions obtenues, d'une image modifiée en (N-1) dimensions respective en superposant les données d'image coupées extraites de l'image en (N-1) dimensions respective plusieurs fois, notamment dans le sens des lignes de pixels ou dans le sens des colonnes de pixels;
les données d'image en N dimensions étant reconstruites à l'aide d'un algorithme de reconstruction d'image qui utilise, en entrée, des données de la pluralité d'images modifiées en (N-1) dimensions.

5. Procédé selon au moins l'une des revendications précédentes, dans lequel
la sélection de la valeur déterminée de l'au moins un paramètre d'entrée sur la base des données d'image en N dimensions du pseudo-objet en N dimensions comprend :
- le calcul, pour chaque coupe du pseudo-objet, d'un paramètre métrique respectif en appliquant un algorithme de calcul métrique prédéterminé aux données d'image en (N-1) dimensions d'une section plane respective des données d'image en N dimensions associée à la coupe respective du pseudo-objet, et
- l'identification de la coupe respective du pseudo-objet pour laquelle le paramètre métrique respectif prend sa valeur extrême, et
- l'identification de la valeur d'entrée respective de l'au moins un paramètre d'entrée utilisé pour reconstruire la section plane respective des données d'image en N dimensions associée à la coupe respective identifiée du pseudo-objet en tant que valeur déterminée sélectionnée de l'au moins un paramètre d'entrée.

6. Procédé selon au moins l'une des revendications précédentes, **caractérisé en ce que** ledit au moins un paramètre d'entrée représente :
- un paramètre de pondération pour définir la pondération d'un terme de données et d'un terme de régularisation selon un algorithme itératif de reconstruction d'images;
- un paramètre de fonction de pénalité utilisé dans une fonction de pénalité pour un terme de régularisation selon un algorithme itératif de reconstruction d'images;
- un paramètre de décalage du centre indiquant un décalage de l'axe de rotation réel du système de mesure par rapport à un axe de rotation cible du système de mesure;
- un paramètre de correction indiquant une correction du durcissement du faisceau;
- un paramètre de correction d'artefacts pour corriger des artefacts d'image;
- un paramètre de filtre utilisé dans un filtre d'image appliqué aux images en (N-1) dimensions; et/ou
- un facteur de pondération pour pondérer différentes sources d'énergies d'image lors de la reconstruction d'images en tomodensitométrie à double énergie.

7. Dispositif de reconstruction d'images tomodensitométriques d'un objet,
le dispositif comportant :
- une interface (110) configurée pour recevoir des données indiquant une pluralité d'images en (N-1) dimensions de l'objet, avec N = 3 ou N = 4, la pluralité d'images en (N-1) dimensions de l'objet étant obtenues à différentes positions angulaires par rapport à l'objet disposé sur une ligne entre une source lumineuse et un détecteur d'images en 2 dimensions dans le cas où N = 3 ou N = 4, ou un détecteur d'images en 3 dimensions dans le cas où N = 4; et
- une unité de reconstruction d'images (150) configurée pour reconstruire des données d'images en N dimensions à l'aide d'un algorithme de reconstruction d'images qui utilise, en entrée, des données de la pluralité d'images en (N-1) dimensions de l'objet et au moins un paramètre d'entrée;
l'unité de reconstruction d'image (150) étant configurée pour exécuter l'algorithme de reconstruction d'image sur la base de sections de données de la pluralité d'images en (N-1) dimensions de l'objet et un ensemble de valeurs déterminé de l'au moins un paramètre d'entrée pour sortir (S707; 5806) des données d'image en N dimensions reconstruites d'un pseudo-objet en N dimensions, le pseudo-objet en N dimensions étant représenté par une pile d'une pluralité de coupes;
chaque coupe de la pluralité de coupes du pseudo-objet étant associée à une même coupe de base de l'objet et reconstruite à partir des mêmes sections de données extraites des images en (N-1) dimensions obtenues correspondant à la même coupe de base de l'objet, mais avec une valeur différente de l'ensemble de valeurs déterminé de l'au moins un paramètre d'entrée comme entrée de l'algorithme de reconstruction d'image, la coupe de base étant une coupe plane en 2 dimensions traversant l'objet; et
l'unité de reconstruction d'image (150) étant configurée pour reconstruire les données d'image en N dimensions finales de l'objet à l'aide de l'algorithme de reconstruction d'image en utilisant, en entrée, la pluralité d'images en (N-1) dimensions obtenues de l'objet et une valeur déterminée de l'au moins un paramètre d'entrée sélectionnée sur la base des données d'image en N dimensions du pseudo-objet en N dimensions.

8. Dispositif selon la revendication 7, le dispositif étant configuré pour mettre en œuvre un procédé selon au moins l'une des revendications 2 à 6.

9. Système de reconstruction d'images tomodensitométriques d'un objet comportant :
- une source lumineuse (S),
- un détecteur d'images en 2 dimensions (D) ou un détecteur d'images en 3 dimensions, et
- un dispositif (100) selon la revendication 7 ou 8.

10. Produit-programme d'ordinateur comprenant un programme d'ordinateur comprenant des instructions de programme d'ordinateur qui, lorsqu'elles sont exécutées par un ordinateur, un processeur ou un contrôleur de tomodensitométrie, amènent l'ordinateur, le processeur ou le contrôleur de tomodensitométrie à mettre en œuvre les étapes d'un procédé selon l'une quelconque des revendications 1 à 6.
